Europäisches Patentamt

European Patent Office

Office européen des brevets

(11) Veröffentlichungsnummer : **0 341 500 B1**

(12) **EUROPÄISCHE PATENTSCHRIFT**

(45) Veröffentlichungstag der Patentschrift :
20.05.92 Patentblatt 92/21

(51) Int. Cl.⁵ : **C09K 17/00, E21F 17/00, C08G 18/36**

(21) Anmeldenummer : 89107613.5

(22) Anmeldetag : 27.04.89

(54) **Verfahren zur Verfestigung von geologischen Formationen.**

(30) Priorität : 10.05.88 DE 3815947

(43) Veröffentlichungstag der Anmeldung :
15.11.89 Patentblatt 89/46

(45) Bekanntmachung des Hinweises auf die
Patenterteilung :
20.05.92 Patentblatt 92/21

(84) Benannte Vertragsstaaten :
AT BE CH DE ES FR IT LI SE

(56) Entgegenhaltungen :
WO-A-86/04600
US-A- 4 201 847
US-A- 4 254 228
US-A- 4 264 743

(73) Patentinhaber : BAYER AG
W-5090 Leverkusen 1 Bayerwerk (DE)
Patentinhaber : BERGWERKSVERBAND
GMBH
Postfach 13 01 40
W-4300 Essen 13 (DE)

(72) Erfinder : Schmidt, Manfred, Dr.
Zeisigstrasse 5
W-4047 Dormagen (DE)
Erfinder : Kapps, Manfred, Dr.
Hoppersheider Weg 55
W-5060 Bergisch Gladbach 2 (DE)
Erfinder : Mann, Max, Dr.
Scheurener Strasse 109
W-5068 Odenthal (DE)
Erfinder : Vehlewald, Peter, Dr.
Fasanenstrasse 20
W-5653 Leichlingen (DE)
Erfinder : Dietrich, Manfred, Dr.
Dresdener Strasse 16
W-5090 Leverkusen 1 (DE)
Erfinder : Meyer, Frank, Dr.
Bogenstrasse 10
W-4300 Essen 15 (DE)
Erfinder : Cornely, Wolfgang, Dr.
Lohstrasse 30
W-4390 Gladbeck (DE)
Erfinder : Mehesch, Hans Ernst, Dr.
Frillendorfer Hoehe 38
W-4300 Essen (DE)

EP 0 341 500 B1

## Beschreibung

Die vorliegende Erfindung betrifft ein neues Verfahren zur Verfestigung von geologischen Formationen im Untertagebau oder im Tiefbau, insbesondere im Steinkohlenbergbau mit zu Polyurethankunststoffen ausreagierenden Reaktionsgemischen auf Basis von organischen Polyisocyanaten und Polyhydroxyverbindungen, wobei spezielle Ester aus (i) polymerisierten ungesättigten Fettsäuren oder deren Gemischen mit monomeren Fettsäuren und (ii) niedermolekularen, mehrwertigen Alkoholen als den Schäumvorgang regulierende Verbindungen eingesetzt werden.

Die Verfestigung geologischer Formation unter Tage, insbesondere im Steinkohlenbergbau, mit Hilfe von der in der Formation aushärtenden, schäumenden Polyurethanen ist bekannt (vgl. z.B. Zeitschrift Glückauf (1968), Seite 666 bis 670; Zeitschrift Glückauf (1977), Seiten 707 bis 711; Zeitschrift Bergbau (1977), Seiten 124 bis 129; DE-PS 1 129 894; DE-PS 1 758 185; DE-PS 1 784 458; DE-PS 2 436 029; DE-PS 2 623 646 oder DE-PS 3 139 395).

Daneben werden derartige zu Polyurethanen reagierende Mischungen auch zum Abdichten gegen Wasser und/oder Gase benutzt.

Nach diesem als Stand der Technik zu betrachtenden Verfahren geht man in der Regel wie folgt vor:

Die beiden Komponenten der Reaktion Polyisocyanat und Polyalkohol (Polyhydroxyl-Komponente) werden separat bis vor ein Bohrloch gefördert, dort kontinuierlich in einem statischen Mischer vereinigt und über das Bohrloch in die Gebirgsformation verpreßt, wo sie unter Aufschäumen aushärten.

Die nach diesem Prinzip zu verfestigenden geologischen Formationen, insbesondere die Gesteinsschichten unter Tage weisen einen stark unterschiedlichen Wassergehalt auf. Bei Verwendung von Reaktionsgemischen, die im wesentlichen aus Polyisocyanaten und den aus der Polyurethanchemie bekannten Polyetherpolyolen bestehen, hat dies zur Folge, daß die Polyisocyanatkomponente mit dem in der Formation vorliegenden Wasser unkontrolliert reagiert, so daß insbesondere bei Gesteinsschichten mit hohem Wassergehalt zwischen dem Polyisocyanat und dem Wasser eine zu Polyharnstoff-Leichtschaumstoffen führende Reaktion abläuft, die eine ausreichende Verfestigung der Gesteinsformation nicht gewährleistet. Eine homogene und ausreichende Verfestigung der Gesteinsformation hat vielmehr zur Voraussetzung, daß, weitgehend unabhängig vom Wassergehalt der Formation, eine kontrollierte und homogene Schaumbildung stattfindet, wobei die Eigenschaften der sich bildenden Schaumstoffe, unabhängig vom Wassergehalt der Formation, durch geeignete Wahl der Zusammensetzung des Reaktionsgemisches vorherbestimmbar sein sollte. Wie sich in der Vergangenheit zeigte, gestattet die Mitverwendung von Rizinusöl neben den üblichen Polyetherpolyolen in der Polyolkomponente einen ersten Schritt in diese Richtung. Die Mitverwendung von Rizinusöl, welches im allgemeinen in Mengen von 5 bis 20 Gew.-%, bezogen auf die Polyolkomponente, eingesetzt wird, reduziert die Tendenz zu unerwünschten Polyisocyanat-Wasser-Nebenreaktion, wodurch ein zu hohes Aufschäumen der Polyurethanharze, insbesondere in Kontakt mit dem in der Formation vorliegenden Wasser und damit eine Schwächung der mechanischen Eigenschaften unterdrückt wird.

In der Praxis hat sich jedoch gezeigt, daß es anzustreben ist, diese Eigenschaft des Rizinusöls, die störende Isocyanat-Wasser-Reaktion zu unterdrücken, weiter zu verstärken, um so ein möglichst homogenes Polyurethanharz zu erhalten, welches eine gleichmäßige Verfestigung der Gesteinsformation gewährleistet.

Im übrigen ist ein weiterer Nachteil der Mitverwendung von Rizinusöl in dem Umstand zu sehen, daß es sich um ein Naturprodukt handelt, welches starken Schwankungen hinsichtlich seiner Eigenschaften unterworfen ist. Da Rizinusöl außerdem in den genannten hohen Mengen mitverwendet werden muß, stellt es auch einen erheblichen Kostenfaktor dar, da die Preise für dieses Naturprodukt starken Schwankungen unterworfen sind und über den Preisen der üblichen Polyetherpolyole liegen können.

Es war daher die der Erfindung zugrunde liegende Aufgabe, ein neues Verfahren zur Verfestigung von geologischen Formationen zur Verfügung zu stellen, welches die unerwünschte Isocyanat-Wasser-Reaktion und das damit verbundene, unkontrollierte Aufschäumen der Reaktionsmischung besser, als es nach dem Stand der Technik möglich ist, unterdrückt.

Diese Aufgabe konnte mit dem nachstehend näher beschriebenen erfindungsgemäßen Verfahren, bei welchem bestimmte Ester aus polymerisierten ungesättigten Fettsäuren bzw. deren Gemischen mit monomeren gesättigten oder ungesättigten Fettsäuren und niedermolekularen Alkoholen mitverwendet werden, gelöst werden. Überraschenderweise wurde gefunden, daß durch die Mitverwendung dieser Ester nicht nur die genannte vorteilhafte Eigenschaft von Rizinusöl übertroffen werden kann, sondern daß auch die mechanischen Eigenschaften der Polyurethankunststoffe wesentlich verbessert werden. Bei der Mitverwendung von Estern aus polymerisierten Fettsäuren und niedermolekularn Polyolen wird vor allem die Bildung von Leichtschaumstoffen, selbst in Gesteinsschichten mit hohem Wassergehalt, verhindert, so daß mit dem erfindungsgemäßen Verfahren gleichmäßig expandierte Polyurethankunststoffe mit ausgezeichneten mechanischen Eigenschaften gebildet werden.

Die Tatsache, daß Ester aus polymerisierten ungesättigten Fettsäuren mit niedermolekularen Polyolen die Bildung von Leichtschaumstoffen verhindern, ist überraschend, da die den Estern zugrundeliegenden, polymerisierten ungesättigten Fettsäuren Stabilisatoren für Polyurethanschaumstoffe darstellen und somit genau das Gegenteil bewirken. So werden gemäß der US-PS 3 476 933 di- bzw. trimerisierte Fettsäuren bei der Herstellung von großporigen Polyurethanschaumstoffen eingesetzt. Unveresterte polymerisierte Fettsäuren zeigen jedoch bei dem erfindungsgemäßen Verfahren keinerlei Einfluß auf die Isocyanat-Wasser-Reaktion und verhindern somit nicht das unkontrollierte Aufschäumen der Reaktionsmischung.

Gegenstand der Erfindung ist ein Verfahren zur Verfestigung von geologischen Formationen im Untertagebergbau oder Tiefbau durch Einbringen von zu Polyurethankunststoffen ausreagierenden Reaktionsgemischen in die zu verfestigenden Formationen, wobei die Reaktionsgemische aus

a) einer Polyisocyanatkomponente,

b) einer Polyolkomponente und

c) mindestens einem Hilfs- bzw. Zusatzmittel

bestehen, dadurch gekennzeichnet, daß man als Komponente c), gegebenenfalls neben weiteren Hilfs- und Zusatzmitteln, c1) Ester einer Hydroxylzahl von 10 bis 630 und einer Säurezahl von maximal 10 aus (i) einer Säurekomponente einer (mittleren) Carboxyl-Funktionalität von mindestens 1,5 bestehend aus polymerisierten ungesättigten Fettsäuren mit mindestens 12 Kohlenstoffatomen oder deren Gemischen mit nicht polymerisierten gesättigten oder ungesättigten Fettsäuren mit mindestens 12 Kohlenstoffatomen und (ii) einer Polyolkomponente, bestehend aus mindestens einem mehrwertigen Alkohol, in einer Menge von bis zu 5 Gew.-%, bezogen auf das Gewicht der Komponente b) verwendet.

Bei der beim erfindungsgemäßen Verfahren einzusetzenden Polyisocyanatkomponente a) handelt es sich vorzugsweise um Polyphenylenpolymethylen-polyisocyanate, wie sie durch Anilin/Formaldehyd-Kondensation und anschließende Phosgenierung hergestellt werden ("polymeres MDI") oder um Carbodiimid-, Biuret-, Urethan- und/oder Allophanatgruppen aufweisende, bei Raumtemperatur flüssige Derivate dieser Polyisocyanate. Die bei Raumtemperatur flüssigen, durch Phosgenierung von Anilin/Formaldehyd-Kondensation erhaltenen Polyisocyanatgemische ("polymeres MDI"), sowie deren flüssige, NCO-Gruppen aufweisende Umsetzungsprodukte mit unterschüssigen Mengen (NCO/OH-Molverhältnis = 1:0,005 bis 1:0,3) mehrwertiger Alkohole des Molekulargewichtsbereichs 62 bis 3000, insbesondere Ethergruppen aufweisender Polyole des Molekulargewichtsbereichs 106 bis 3000 sind bevorzugt. Bei Raumtemperatur flüssige Gemische aus 2,4'- und 4,4'-Diisocyanatdiphenylmethan sind ebenfalls als Polyisocyanatkomponente a) geeignet. Grundsätzlich kommen erfindungsgemäß aber auch andere organische Polyisocyanate, wie sie z.B. aus der DE-OS 2 832 253, Seiten 10 und 11, bekannt sind, in Frage. Ganz besonders bevorzugt werden Polyisocyanatgemische der Diphenylmethan-Reihe einer Viskosität bei 25°C von 50 bis 500 mPas mit einem NCO-Gehalt von ca. 30 bis 33 Gew.-% eingesetzt.

Bei der Polyolkomponente b) handelt es sich um organische Polyhydroxylverbindungen bzw. um Gemische organischer Polyhydroxylverbindungen einer (mittleren) OH-Zahl von 100 bis 800, vorzugsweise 250 bis 400.

Im allgemeienen handelt es sich bei der Polyolkomponente b) um die aus der Polyurethanchemie an sich bekannten Polyetherpolyole bzw. um Gemische verschiedener derartiger Polyetherpolyole. Im Falle der Verwendung von Gemischen verschiedener Polyhydroxylverbindungen beziehen sich die gemachten Angaben bezüglich der Hydroxylzahl auf diese Gemische. Dies bedeutet, daß einzelne Komponenten der Gemische auf eine außerhalb der genannten Bereiche liegende Hydroxylzahl aufweisen können. Gut brauchbare Polyetherpolyole sind Propoxylierungsprodukte und/oder Ethoxylierungsprodukte von zwei- bis achtwertigen Startermolekülen wie beispielsweise Wasser, 1,2-Dihydroxypropan, Trimethylolpropan, Pentaerythrit, Glycerin, Sorbit, Ethylendiamin und gegebenfalls Rohrzucker. Im allgemeinen weist die Komponente b) eine mittlere Hydroxylfunktionalität von 2,0 bis 5,0, vorzugsweise 2,0 bis 3 auf. Geeignete derartige Gemische können beispielsweise dadurch erhalten werden, daß man entsprechende Gemische von Startermolekülen der beispielhaft genannten Art einer Alkoxylierungsreaktion unterzieht. Es ist jedoch auch möglich, separat hergestellte Polyhydroxypolyether nach ihrer Herstellung miteinander zu erfindungsgemäß einzusetzenden Komponente b) abzumischen.

Erfindungswesentlich ist nun die Mitverwendung der obengenannten Ester c1), gegebenenfalls neben weiteren Hilfs- und Zusatzmitteln c).

Bei der Säurekomponente (i) handelt es sich um "polymerisierte ungesättigte Fettsäuren" oder um deren Gemische mit monomeren gesättigten oder ungesättigten Fettsäuren. Unter "ungesättigten Fettsäuren" sind hierbei ein- oder mehrfach olefinisch ungesättigte aliphatische Monocarbonsäuren mit vorzugsweise linearer Molekülstruktur und endständig angeordneter Carboxylgruppe mit 12 bis 22, vorzugsweise 14 bis 18 und besonders bevorzugt 18 Kohlenstoffatomen zu verstehen. Unter "polymerisierten" derartigen Fettsäuren sind insbesondere die Dimeren bzw. Trimeren der Säuren zu verstehen. Vorzugsweise besteht die dem Ester zugrundeliegende Säurekomponente (i) aus einem Gemisch aus dimerisierter und trimerisierter ungesättigter Fettsäure, welches noch erhebliche Anteile an monomerer ungestättigter Fettsäure oder auch an gesättigten Fettsäuren aufweisen kann. Auch technisch reine "Trimersäure", d.h. eine "polymerisierte ungesättigte Fettsäure" mit einem Gehalt von bis zu 95 % trimerer Säure ist erfindungsgemäß für die Herstellung der erfindungswesentlichen Ester verwendbar. Aus dem bisher gesagten folgt, daß die Zusammensetzung der Säurekomponente innerhalb weiter Bereiche schwanken kann. So kann der Gehalt, jeweils bezogen auf das Gesamtgewicht der Säurekomponente, an monomerer Säure bei 0 bis 50 Gew.-%, an dimerer Säure bei 0 bis 100 Gew.-% und an trimerer Säure bei 0 bis 95 Gew.-% liegen. Die mittlere Carboxylfunktionalität der Säurekomponente liegt jedoch stets bei mindestens 1,5.

Zur Polymerisation geeignet sind im Prinzip alle ein- und/oder mehrfach ungesättigte Fettsäuren mit 12 bis 22, vorzugsweise 14 bis 18 und insbesondere 18 Kohlenstoffatomen wie z.B. Lauroleinsäure, Myristoleinsäure, Palmitoleinsäure, Ölsäure, Gadoleinsäure, Erucasäure, Rizinensäure, Linolsäure, Linolensäure, Arachidonsäure, Clupanodonsäure oder beliebige Gemische derartiger Säuren. Bei der an sich bekannten Polymerisation dieser Säuren entstehen die genannten Gemische aus monomeren, dimeren und/oder trimeren Säuren. Selbstverständlich ist es auch möglich, vor der Herstellung der Ester den "polymerisierten Fettsäuren" geringe Mengen an gesättigten Fettsäuren mit 12 bis 22, vorzugsweise 14 bis 18 und insbesondere 18 Kohlenstoffatomen zuzumischen bzw. zur Herstellung der "polymerisierten ungesättigten Fettsäuren" Gemische monomerer Säuren zu verwenden, die einen geringen Anteil an gesättigten Fettsäuren aufweisen. Auf jeden Fall muß jedoch das resultierende, zur Herstellung der Ester verwendete Säuregemisch eine mittlere Carboxylfunktionalität von mindestens 1,5 aufweisen. Geeignete gesättigte Fettsäuren wären beispielsweise n-Dodecancarbonsäure, Palmitinsäure oder Stearinsäure.

Zur Herstellung der erfindungswesentlichen Ester geeignete "polymerisierte ungesättigte Fettsäuren" werden beispielsweise von der Firma Unichema unter der Bezeichnung ®Pripol auf dem Markt angeboten.

Bei der den erfindungswesentlichen Estern zugrundeliegenden Polyolkomponente handelt es sich um beliebige mehrwertige Alkohole, vorzugsweise besteht die Polyolkomponente (ii) aus mindestens einem mehrwertigen Alkohol des Molekulargewichtsbereichs 62 bis 282. Geeignete mehrwertige Alkohole sind beispielsweise Ethylenglykol, Diethylenglykol und höhere Homologe, 1,2-und 1,3-Dihydroxypropan, Dipropylenglykol und höhere Homologe, 1,2-Dihydroxybutan, 1,3-, 2,3-, 1,4- oder 1,5-Dihydroxypentan, Neopentylglykol, 1,6- oder 2,5-Dihydroxyhexan, 2-Methylpentandiol-2,4, 3-Methylpentandiol-1,5, 2-Methyl-2-propyl-propandiol-1,3, 2,2-Diethyl-propandiol-1,3, 2-Ethyl-hexandiol-1,3, 2,5-Dimethyl-hexandiol-2,5, 2,2,4-Trimethyl-pentandiol-1,3, 2,2,4-Trimethyl-hexandiol-1,6, Octadecanol-1,18, Butendiol, Butindiol, Glycerin, 1,1,1-Trimethylolethan, Hexantriol-1,2,4, 1,1,1-Trimethylolpropan, Pentaerythrit, Sorbit, tert. Stickstoffatome aufweisende Alkohole wie N,N-Dimethylethanolamin, N-Methyl-diethanolamin, Triethanolamin oder beliebige Gemische der beispielhaft genannten Alkohole. Besonders bevorzugt werden zur Herstellung der Polyester Hexandiol-1,6 oder 1,1,1-Trimethylolpropan oder Gemische dieser beiden mehrwertigen Alkohole verwendet.

Die Herstellung der Ester aus den beispielhaft genannten Komponenten (i) und (ii) erfolgt in an sich bekannter Weise durch Veresterung bei Temperaturen von 50 bis 300°C, vorzugsweise bei 100 bis 250°C, gegebenenfalls unter azeotroper Entfernung des Reaktionswassers und gegebenenfalls unter Zuhilfenahme von üblichen Veresterungskatalysatoren wie z.B. Schwefelsäure, Toluolsulfonsäuren, saure Ionenaustauscherharze, Lewis-Säuren wie $BF_3$ oder Metallkatalysatoren wie $SnCl_2$, $ZnCl_2$, Dibutylzinnoxid, Titantetrabutylester (s.a. Kunststoff-Handbuch, Bd. 7, "Polyurethane", Carl Hanser Verlag, 1983, Seite 54 bis 62 und die dort zitierte Literatur).

Die erfindungswesentlichen Ester c1) weisen eine Hydroxylzahl von 10 bis 630, vorzugsweise 20 bis 282 und besonders bevorzugt von 30 bis 200 bei einer Säurezahl von maximal 10 auf.

Die erfindungswesentlichen Ester c1) werden bei der Durchführung des erfindungsgemäßen Verfahrens in einer Menge von bis zu 5 Gew.-%, vorzugsweise von 0,01 bis 1,0 Gew.-% und insbesondere von 0,05 bis 0,5 Gew.-%, bezogen auf das Gewicht der Komponente b) verwendet. Sie können sowohl der Polyisocyanatkomponente a) als auch der Polyolkomponente b) vor der Herstellung des Reaktionsgemischs einverleibt werden.

Bei den gegebenenfalls außerdem mitzuverwendenden Hilfsund Zusatzmitteln c) handelt es sich beispielsweise um

c2) Wasser, welches in einer Menge von bis zu 5, vorzugsweise bis zu 4 Gew.-%, bezogen auf das Gewicht der Komponente b), mitverwendet werden kann, oder um

c3) Katalysatoren für die Isocyanat-Additionsreaktion wie insbesondere zinnorganische Verbindungen wie Zinn(II)octoat oder Dibutylzinndilaurat oder tert. Amine wie N,N-Dimethylbenzylamin oder Triethylendiamin. Diese Katalysatoren können in einer Menge von bis zu 2 Gew.-%, vorzugsweise in einer Menge von 0,3 bis 1 Gew.-%, bezogen auf das Gesamtgemisch, mitverwendet werden.

Weitere gegebenenfalls mitzuverwendenden Hilfs- und Zusatzmittel sind beispielsweise

c4) Flammschutzmittel (z.B. Phosphorsäure-Derivate),

c5) niedermolekulare Alkanpolyole einer über 800 liegenden Hydroxylzahl wie z.B. Ethylenglykol, Propylenglykol und/oder Trimethylolpropan,

c6) Ricinusöl oder

c7) organische bzw. anorganische Füllstoffe (z.B. Harnstoff, Calciumcarbonat, Glimmer oder Talk).

Während die erfindungswesentlichen Hilfsmittel c1) sowohl der Polyol- als auch der Polyisocyanatkomponente einverleibt werden können, werden die übrigen, gegebenenfalls mitzuverwendenden Hilfs- und Zusatzmittel, im allgemeinen vor der Durchführung des erfindungsgemäßen Verfahrens mit der Polyolkomponente vereinigt.

Die Ausgangskomponenten werden zur Durchführung des erfindungsgemäßen Verfahrens in solchen Mengen miteinander vermischt, die einer Isocyanat-Kennzahl von 90 bis 150, vorzugsweise von 120 bis 140, entsprechen. Unter "Isocyanat-Kennzahl" ist hierbei der Quotient aus der Anzahl der im Reaktionsgemisch vorliegenden Isocyanatgruppen, geteilt durch die Anzahl der im Reaktionsgemisch vorliegenden, gegenüber Isocyanatgruppen reaktionsfähigen Gruppen, multipliziert mit 100, zu verstehen, wobei Wasser als difunktionelle Verbindung in die Berechnung eingeht.

Zur Durchführung des erfindungsgemäßen Verfahrens werden die erfindungswesentlichen Hilfsmittel c1), wie ausgeführt, entweder der Polyisocyanatkomponente a) oder der Polyolkomponente b) und die gegebenenfalls außerdem mitzuverwendenden Hilfs- und Zusatzmittel c) der Polyolkomponente b) einverleibt, worauf sich eine intensive Durchmischung der Komponenten a) und b) anschließt. Hierzu können die an sich bekannten Mischaggregate des Standes der Technik verwendet werden.

Die Durchführung des erfindungsgemäßen Verfahrens erfolgt im übrigen nach den bekannten Methoden des Standes der Technik, indem man in die zu verfestigenden Formationen eine Vielzahl von Löchern einer Tiefe von ca. 2 bis 6 m und eines Durchmessers von ca. 20 bis 80 mm bohrt und in diese die erfindungsgemäßen Gemische einbringt. In der Regel verschließt man die Bohrlöcher mittels eines Bohrlochverschlusses mit einer Durchführung, durch die über ein Rohr die Reaktionsmischung injiziert werden kann, wobei ein in der Durchführung enthaltenes Rückschlagventil das Bohrloch nach Abschluß der Injektion gegen Wiederausfließen der Reaktionsmischung sichert. Das Injizieren kann mit Drücken bis über 100 bar erfolgen, zu hohe Drücke können indessen zum Ausbrechen von Kohle oder Gestein führen.

Prinzipiell ist es auch möglich, bei der Durchführung des erfindungsgemäßen Verfahrens nach dem Prinzip der US-PS 3 698 196 zu verfahren, wobei die Polyisocyanatkomponente a) einerseits und die Polyolkomponente b) andererseits unter Beachtung der obengenannten Isocyanat-Kennzahl in die Patronen einer Zweikammer-Patrone gefüllt werden, die dann in das vorgefertigte Bohrloch eingebracht und dort zur Vermischung der beiden Komponenten mechanisch zertrümmert wird. Nach der Zertrümmerung der Patrone wird das Bohrloch verschlossen. Auch bei dieser Variante werden selbstverständlich die erfindungswesentlichen Hilfsmittel c1) entweder der Polyisocyanatkomponente oder der Polyolkomponente und die übrigen, gegebenenfalls mitzuverwendenden Hilfs- und Zusatzmittel der Polyolkomponente zugegeben. Das Zweikammer-Patronen-Verfahren ist jedoch gegenüber der erstgenannten Verfahrensweise weniger bevorzugt.

Nach dem Einbringen des flüssigen Reaktionsgemischs in die geologische Formation und nach dem Verschließen der Bohrlöcher dringt das vorzugsweise aufschäumend erhärtende Gemisch unter dem eigenen Schäumdruck in die zu verfestigenden Formationen ein und füllt gleichzeitig auch das Bohrloch vollständig aus. Die resultierenden Polyurethankunststoffe, insbesondere -schaumstoffe, bewirken aufgrund ihrer ausgezeichneten Haftung an der Kohle bzw. dem Nebengestein und aufgrund ihrer ausgezeichneten mechanischen Eigenschaften eine nachhaltige Verfestigung der zu verfestigenden geologischen Formation.

Durch die erfindungswesentliche Maßnahme der Mitverwendung der Ester c1) wird erreicht, daß das durch Wasserreaktion entstehende Kohlendioxid anfangs entweicht und somit es erst in der Endphase der Reaktion zu dem gewünschten Aufschäumen und zur Ausbildung der endgültigen, gleichmäßigen, vorzugsweise groben Schaumstruktur kommt.

Ein Arbeiten ohne die erfindungswesentlichen Zusätze würde bewirken, daß bereits in der Anfangsphase der Reaktion ein Aufschäumen stattfindet, welches zu Schaumstrukturen mit einer inhomogenen Dichteverteilung führt, welche in weiten Bereichen eine zu geringe Dichte und damit zu schlechte mechanische Eigenschaften aufweisen. Bei dem genannten Aufschäumen in der späteren Reaktionsphase tritt eine derartige, unerwünschte unterschiedliche Dichte der Schaumstoffe nicht mehr auf, so daß stets Schaumstoffe einer homogenen Dichte und damit mit homogenen mechanischen Eigenschaften resultieren. Die erfindungswesentlichen Ester aus polymerisierten ungesättigten Fettsäuren erweisen sich diesbezüglich als wesentlich effektiver als das für den gleichen Zweck bislang eingesetzte Rezinusöl. Sie können jedoch auch dafür verwendet werden, den Effekt von Rizinusöl in Rizinusöl enthaltenden Rezepturen zu vertärken.

Die nachfolgenden Beispiele dienen der weiteren Erläuterung des erfindungsgemäßen Verfahrens. Alle Prozentangaben beziehen sich auf Gewichtsprozente.

In den nachstehenden Beispielen werden folgende Ausgangskomponenten eingesetzt:

Polyetherpolyol I, hergestellt aus einem Gemisch aus Saccharose und 1,2-Propandiol im Molverhältnis 1:5 und Propylenoxid mit einer OH-Zahl von 380 und einer Viskosität von 580 mPas bei 25°C.

Polyetherpolyol II, hergestellt aus Glycerin und Propylenoxid mit einer OH-Zahl von 380 und einer Viskosität von 450 mPas bei 25°C.

Polyetherpolyol III, hergestellt aus 1,2-Propandiol und Propylenoxid mit einer OH-Zahl von 284 und einer Viskosität von 75 mPas bei 25°C.

Rizinusöl I, 1. Pressung, mit einer Jodzahl von 87,2, einer OH-Zahl von 158, einem Wassergehalt von 0,14 % und einer Viskosität von 678 mPas bei 25°C.

Polymeres MDI, ein durch Phosgenierung eines Formaldehyd-Anilin-Kondensats erhaltenes Isocyanat, das zu 50 % aus Diisocyanatophenylmethan besteht, mit einem NCO-Gehalt von 33 Gew.-% und einer Viskosität von 140 mPas bei 25°C.

Ester A:

Gemäß nachstehendem Herstellungsbeispiel A

Ester B:

Gemäß nachstehendem Herstellungsbeispiel B

Herstellung der Ester A und B (allgemeine Arbeitsvorschrift)

Die Säurekomponente (i) und die Polyolkomponente (ii) werden in einem Reaktionskessel vorgelegt. Anschließend wird das Reaktionsgemisch auf ca. 170°C erhitzt und das entstehende Reaktionswasser solange destillativ entfernt, bis unter diesen Reaktionsbedingungen kein weiteres Wasser mehr überdestilliert. Anschließend werden 50 ppm (Gewicht) Titantetrabutylat hinzugefügt und die Temperatur auf 200°C erhöht, wobei gleichzeitig der Druck auf 10 mbar reduziert wird. Unter weiterem Abdestillieren von Reaktionswasser wird die Reaktion unter diesen Bedingungen zu Ende geführt.

Ester A:

Säurekomponente: 45,67 kg einer handelsüblichen "polymerisierten ungesättigten Fettsäure", basierend auf olefinisch ungesättigter $C_{18}$-Fettsäure mit einem Gehalt an ca. 40 % monomerer ungesättigter Fettsäure und ca. 60 % eines Gemischs aus dimerer und trimerer Säure (®Pripol 1055 der Fa. Unichema).

Polyolkomponente: 9,18 kg 1,1,1-Trimethylolpropan

Analytische Daten: Säurezahl: 1,8
Hydroxylzahl: 50
Viskosität (25°C): 28 000 mPa.s

Ester B:

Säurekomponente: 8,41 g einer handelsüblichen "polymerisierten olefinisch ungesättigten Fettsäure" basierend auf olefinisch ungesättigter $C_{18}$-Fettsäure mit einem Gehalt von 97 % dimerer Fettsäure und 3 % trimerer Fettsäure (®Pripol 1010 der Fa. Unichema).

Polyolkomponente: 2,11 kg Hexandiol-1,6

Analytische Daten: Säurezahl: <0,1
Hydroxylzahl: 41,6
Viskosität (25°C): 57 700 mPa.s

In den nachfolgenden Beispielen 1 bis 6 werden jeweils drei Parallelversuche durchgeführt, die sich durch die jeweils eingegebene Wassermenge voneinander unterscheiden. Aus den erfindungsgemäßen Beispielen 4, 5 und 6 ist klar ersichtlich, daß eine Erhöhung der Wassermenge von 1,0 auf 5,0 g im Unterschied zu den Vergleichsbeispielen, insbesondere zu Beispiel 1 (Vergleichbeispiel A), kaum noch zu einer erhöhten Expansion führt. Die Systeme gemäß Erfindung sind daher bezüglich ihres Schäumverhaltens gegenüber einem Wasserüberschuß weitgehend inert.

Beispiel 1 (Vergleichsbeispiel A)

In einem nicht gewachsten Papp-Becher wurden jeweils die angegebenen Polyolmischungen mit den angegebenen Wassermengen vermischt und anschließend mit 120 g polymerem MDI mit einem flachen Holzstab 60 Sekunden von Hand innig verrührt. Danach wurde das Gemisch in eine vertikal hängende, unten geschlossene Polyamid-Schlauchfolie (Umfang 134 mm) gegossen. Die Füllhöhe des nicht Gasentwickelnden flüssigen Reaktionsgemischs wird gleich 1 gesetzt und dient als Bezugsmaß für die zu beobachtende Expansion. Die Expansion wird als Vielfaches der Füllhöhe angegeben und als "Schäumfaktor" bezeichnet. Eine Volumenzunahme um 100 % wird demnach mit Schäumfaktor 2,0 charakterisiert.

| Polyolmischung: | Polyetherpolyol I | 53,1 g | 52,0 g | 50,9 g |
|---|---|---|---|---|
| | Polyetherpolyol III | 45,9 g | 45,0 g | 44,1 g |
| Wasser: | | 1,0 g | 3,0 g | 5,0 g |
| MDI: | | 120 g | 120 g | 120 g |
| Schäumfaktoren: | | 1,9 | 4,1 | 6,6 |

Der Schaum ist jeweils aufgeschwommen und hat sich deutlich von einer darunterliegenden, weniger stark geschäumten Phase separiert (Rohdichte-Sprung). Die Erfahrung hat gezeigt, daß solche Effekte auf ungenügende Festigkeit - mangels Masse im oberen Bereich - hindeuten. Solche Formulierungen versagen beim Einsatz unter Tage.

Beispiel 2 (Vergleichsbeispiel B)

Verfahren wie in Beipiel 1 beschrieben.

| Polyolmischung: | Polyetherpolyol I | 45,0 g | 44,1 g | 43,2 g |
|---|---|---|---|---|
| | Polyetherpolyol III | 39,0 g | 38,2 g | 37,4 g |
| | Rizinusöl I | 15,0 g | 14,7 g | 14,4 g |
| Wasser: | | 1,0 g | 3,0 g | 5,0 g |
| MDI: | | 120 g | 120 g | 120 g |
| Schäumfaktoren: | | 2,5 | 3,5 | 3,7 |

Beispiel 3 (Vergleichsbeispiel C)

Verfahren wie in Beispiel 1 beschrieben

| Polyolmischung | Polyethrpolyol I | 45,0 g | 44,1 g | 43,2 g |
|---|---|---|---|---|
| | Polyetherpolyol III | 39,0 g | 38,2 g | 37,4 g |
| | Rizinusöl I | 15,0 g | 14,7 g | 14,4 g |
| | Dimersäure | 0,1 g | 0,1 g | 0,1 g |
| | (Pripol 1055) | | | |

Beispiel 4 (erfindungsgemäß)

Verfahren wie in Beispiel 1 beschrieben

```
Polyolmischung:  Polyetherpolyol I    45,0 g  44,1 g  43,2 g
                 Polyetherpolyol II   39,0 g  38,2 g  37,4 g
                 Rizinusöl I          15,0 g  14,7 g  14,4 g
                 Ester A               0,1 g   0,1 g   0,1 g


Wasser:                                1,0 g   3,0 g   5,0 g
MDI:                                 120   g 120   g 120   g
Schäumfaktoren                         1,7     2,3     2,6
```

Das Reaktionsprodukt ist gleichmäßig durch Blasen aufgetrieben. Ein Rohdichte-Sprung ist nicht erkennbar.

Beispiel 5 (erfindungsgemäß)

Verfahren wie in Beispiel 1 beschrieben

```
Polyolmischung:  Polyetherpolyol I    45,0 g  44,1 g  43,2 g
                 Polyetherpolyol III  39,0 g  38,2 g  37,4 g
                 Rizinusöl I          15,0 g  14,7 g  14,4 g
                 Ester B               0,1 g   0,1 g   0,1 g


Wasser                                 1,0 g   3,0 g   5,0 g
MDI                                  120   g 120   g 120   g
Schäumfaktoren                         1,7     2,3     2,6
```

Beispiel 6 (erfindungsgemäß)

Verfahren wie in Beispiel 1 beschrieben

```
Polyolmischung:  Polyetherpolyol I    53,1 g  52,0 g  50,9 g
                 Polyetherpolyol III  45,9 g  45,0 g  44,1 g
                 Ester A               0,1 g   0,1 g   0,1 g


Wasser                                 1,0 g   3,0 g   5,0 g
MDI                                  120   g 120   g 120   g
Schäumfaktoren                         1,5     2,2     2,4
```

**Patentansprüche**

1. Verfahren zur Verfestigung von geologischen Formationen im Untertagebergbau oder Tiefbau durch Ein-

8

bringen von zu Polyurethankunststoffen ausreagierenden Reaktionsgemischen in die zu verfestigenden Formationen, wobei die Reaktionsgemische aus

a) einer Polyisocyanatkomponente,

b) einer Polyolkomponente und

c) mindestens einem Hilfs- bzw. Zusatzmittel

bestehen, dadurch gekennzeichnet, daß man als Komponente c), gegebenenfalls neben weiteren Hilfs-und Zusatzmitteln, c1) Ester einer Hydroxylzahl von 10 bis 630 und einer Säurezahl von maximal 10 aus (i) einer Säurekomponente einer (mittleren) Carboxyl-Funktionalität von mindestens 1,5 bestehend aus polymerisierten ungesättigten Fettsäuren mit mindestens 12 Kohlenstoffatomen oder deren Gemischen mit nicht polymerisierten gesättigten oder ungesättigten Fettsäuren mit mindestens 12 Kohlenstoffatomen und (ii) einer Polyolkomponente, bestehend aus mindestens einem mehrwertigen Alkohol, in einer Menge von bis zu 5 Gew.-%, bezogen auf das Gewicht der Komponente b) verwendet.

2. Verfahren gemäß Anspruch 1, dadurch gekennzeichnet, daß man als Komponente c1) solche Ester verwendet, deren Säurekomponente im wesentlichen aus dimeren und/oder trimeren ungesättigten Fettsäuren mit 14 bis 18 Kohlenstoffatomen besteht.

3. Verfahren gemäß Anspruch 1, dadurch gekennzeichnet, daß es sich bei der Komponente c1) um solche Ester handelt, deren Säurekomponente im wesentlichen aus einem Gemisch aus monomeren, dimeren und trimeren ungesättigten Fettsäuren mit jeweils 14 bis 18 Kohlenstoffatomen besteht.

4. Verfahren gemäß Anspruch 1 bis 3, dadurch gekennzeichnet, daß es sich bei der Komponente c1) um solche Ester handelt, deren Polyolkomponente aus mindestens einem mehrwertigen Alkohol des Molekulargewichtsbereichs 62 bis 286 besteht.

5. Verfahren gemäß Anspruch 1 bis 4, dadurch gekennzeichnet, daß es sich bei der Komponente c1) um solche Ester handelt, deren Polyolkomponente im wesentlichen aus Hexandiol-1,6 und/oder Trimethylolpropan besteht.

6. Verfahren gemäß Anspruch 1 bis 5, dadurch gekennzeichnet, daß man die Komponente c1) der Polyisocyanatkomponente a) vor der Herstellung des Reaktionsgemisches einverleibt.

7. Verfahren gemäß Anspruch 1 bis 5, dadurch gekennzeichnet, daß man die Komponente c1) der Komponente b) vor der Herstellung des Reaktionsgemisches einverleibt.

## Claims

1. A process for stabilizing geological formations in underground mining or civil engineering by introduction of reaction mixtures reacting out to polyurethane plastics into the formations to be stabilized, the reaction mixtures consisting of

a) a polyisocyanate component,

b) a polyol component and

c) at least one auxiliary or additive,

characterized in that, optionally in addition to other auxiliaries and additives, component c) consists of c1) esters having a hydroxyl value of 10 to 630 and an acid value of at most 10 of (i) an acid component having an (average) carboxyl functionality of at least 1.5 consisting of polymerized unsaturated fatty acids containing at least 12 carbon atoms or mixtures thereof with unpolymerized, saturated or unsaturated fatty acids containing at least 12 carbon atoms and (ii) a polyol component consisting of at least one polyhydric alcohol in a quantity of up to 5% by weight, based on the weight of component b).

2. A process as claimed in claim 1, characterized in that esters of which the acid component consists essentially of dimeric and/or trimeric unsaturated fatty acids containing 14 to 18 carbon atoms are used as component c1).

3. A process as claimed in claim 1, characterized in that component c1) consists of esters of which the acid component consists essentially of a mixture of monomeric, dimeric and trimeric unsaturated fatty acids containing 14 to 18 carbon atoms.

4. A process as claimed in claims 1 to 3, characterized in that component c1) is an ester of which the polyol component consists of at least one polyhydric alcohol having a molecular weight in the range from 62 to 286.

5. A process as claimed in claims 1 to 4, characterized in that component c1) is an ester of which the polyol component consists essentially of hexane-1,6-diol and/or trimethylol propane.

6. A process as claimed in claims 1 to 5, characterized in that component c1) is incorporated in the polyisocyanate component a) before preparation of the reaction mixture.

7. A process as claimed in claims 1 to 5, characterized in that component c1) is incorporated in component b) before preparation of the reaction mixture.

**Revendications**

1. Procédé de consolidation de formations géologiques dans l'exploitation souterraine ou le génie civil par introduction de mélanges réactionnels réagissant en formant des matières plastiques du type polyuréthanne dans les formations à consolider, les mélanges réactionnels étant constitués

a) d'un composant polyisocyanate

b) d'un composant polyol et

c) d'au moins une substance auxiliaire ou un additif,

caractérisé en ce qu'on utilise comme composant (c), le cas échéant à côté d'autres substances auxiliaires et additifs, c1) des esters ayant un indice d'hydroxyle de 10 à 630 et un indice d'acide au maximum égal à 10 dérivés (i) d'un composant acide de fonctionnalité carboxylique (moyenne) au moins égale à 1,5, constitué d'acides gras non saturés polymérisés ayant au moins 12 atomes de carbone ou de leurs mélanges avec des acides gras saturés ou non saturés non polymérisés ayant au moins 12 atomes de carbone et (ii) d'un composant polyol, constitué d'au moins un alcool polyvalent, en une quantité allant jusqu'à 5% en poids par rapport au poids de composant b).

2. Procédé suivant la revendication 1, caractérisé en ce qu'on utilise comme composant c1) des esters dont le composant acide est principalement constitué d'acides gras non saturés dimères et/ou trimères ayant 14 à 18 atomes de carbone.

3. Procédé suivant la revendication 1, caractérisé en ce que le composant c1) consiste en esters dont le composant acide est principalement constitué d'un mélange d'acides gras non saturés monomères, dimères et trimères ayant chacun 14 à 18 atomes de carbone.

4. Procédé suivant les revendications 1 à 3, caractérisé en ce que le composant c1) consiste en esters dont le composant polyol est formé d'au moins un alcool polyvalent de poids moléculaire compris dans la plage de 62 à 286.

5. Procédé suivant les revendications 1 à 4, caractérisé en ce que le composant c1) consiste en esters dont le composant polyol est principalement constitué d'hexanediol-1,6 et/ou de triméthylolpropane.

6. Procédé suivant les revendications 1 à 5, caractérisé en ce qu'on incorpore le composant c1) du composant polyisocyanate a) avant la production du mélange réactionnel.

7. Procédé suivant les revendications 1 à 5, caractérisé en ce qu'on incorpore le composant c1) du composant b) avant la production du mélange réactionnel.